# EUROPEAN PATENT APPLICATION

(11) **EP 2 428 764 A1**
(43) Date of publication of application: **14.03.2012**
(21) Application number: 11179801.3
(22) Date of filing: 02.09.2011
(51) Int. Cl.: G01B 11/24, G01B 21/20, A61C 13/00

(54) **System and method for processing and displaying intra-oral measurement data**

(30) Priority: 10.09.2010 US 381731 P; 25.08.2011 US 217629
(71) Applicant: Dimensional Photonics International, Inc., Wilmington, Massachusetts 01887 (US)
(72) Inventor: Dillon, Robert, Bedford, NH 03110 (US); Vesper, Andrew, Townsend, MA 01469 (US); Krohg, Olaf, Topsfield, MA 01983 (US); Fillion, Timothy, Bedford, MA 01730 (US)
(74) Representative: Greenwood, John David

(57) **Abstract**

Provided are a system and method for generating and displaying intra-oral measurement data. A measurement field of view of an intra-oral scanning device (12) is directed at a first region of an object scene (20) to acquire image data related to the first region. The intra-oral scanning device is moved from the first region along a path proximal to one or more surfaces of the object scene to a second region of the object scene. The intra-oral scanning device acquires image data corresponding to the object scene along the path. A set of 3D data is presented in a display (16). 3D data are generated from the image data acquired for the first region of the object scene to the second region of the object scene. Presented in a window of the display is a current video image of acquired image data of the object scene in the measurement field of view. The current video image overlays a respective portion of a graphical representation of accumulated data of the set of 3D data.

## Description

### RELATED APPLICATIONS

This application claims the benefit of the earlier filing date of U.S. Provisional Patent Application Serial No. 61/381,731, filed September 10, 2010 and titled "Method of Data Processing and Display for a Three-Dimensional Intra-Oral Scanner," the contents of which are incorporated herein by reference in their entirety.

### FIELD OF THE INVENTION

The invention relates generally to three-dimensional imaging (3D) of an object surface. More particularly, the invention relates to an apparatus and a method for generating and displaying a graphical representation of a set of 3D data acquired during a scanning operation of an intra-oral cavity and overlaying the displayed graphical representation with a two-dimensional (2D) video image of the intra-oral cavity.

### BACKGROUND

A dental or medical 3D camera or scanner, when part of an imaging system, can capture a series of 2D intensity images of one or more object surfaces in an object scene. In some systems, this is achieved by projecting structured light patterns onto the surface. A light pattern can be generated by projecting a pair of coherent optical beams onto the object surface and the resulting fringe pattern varied between successive 2D images. Alternatively, the projected light pattern may be a series of projected parallel lines generated using an intensity mask and the projected pattern shifted in position between successive 2D images. In still other types of 3D imaging systems, confocal imaging techniques and the like are employed.

A typical imaging system includes a wand or other handheld scanning device that a user manually directs at the object scene. During measurement of the object scene, the wand can be used to acquire a set of 3D data related to the object scene while the wand is in motion. In some applications, multiple object surfaces are measured by positioning the wand to be in close proximity to the object surfaces. However, when the wand is positioned at one location of the object scene, some sections of the object scene may be obscured from view of the wand. For example, in dental applications, the presence of teeth, gingiva, or other dental features in a particular static view can obscure the view of other teeth. Accordingly, a clinician may acquire 3D data sets from various scans of a dental arch. A processing unit can register the overlapped regions of all 3D data sets acquired from the various scans to obtain a full 3D data set representation of all surfaces observed during the measurement procedure.

The present invention is as claimed in the claims.

### BRIEF SUMMARY

In one aspect, a computer-implemented method is provided for displaying intra-oral measurement data. A measurement field of view of an intra-oral scanning device is directed at a first region of an object scene to acquire image data related to the first region. The intra-oral scanning device is moved from the first region along a path proximal to one or more surfaces of the obj ect scene to a second region of the obj ect scene. The intra-oral scanning device acquires image data corresponding to the object scene along the path. A set of 3D data is presented in a display. 3D data are generated from the image data acquired for the first region of the object scene to the second region of the object scene. Presented in a window of the display is a current video image of acquired image data of the object scene in the measurement field of view. The current video image overlays a respective portion of a graphical representation of accumulated data of the set of 3D data.

In another aspect, a method is provided for displaying intra-oral measurement data related to a dental arch. An intra-oral measurement device is positioned at a first scan starting point proximal to a first region of a dental arch. A measurement field of view of the intra-oral measurement device is directed at the first region of the dental arch. The intra-oral measurement device is moved from the first region along a path proximal to a surface of the dental arch to a first scan end point proximal to a second region of the dental arch to acquire image data from the first scan starting point to the first scan end point. A set of 3D data generated from the acquired image data is displayed at a display. A video image of the acquired image data is overlaid on a respective portion of a graphical representation of accumulated data of the set of 3D data. The 3D data is displayed in the window by adjusting an opacity level of the current video image.

In another aspect, an image overlay system comprises a 3D processor, a video interface, and an overlay engine. The 3D processor generates three-dimensional (3D) data from image data acquired in an intra-oral scan procedure. The video interface outputs a current video image in response to receiving the image data. The overlay engine generates a graphical representation of accumulated data of the 3D data and that overlays a respective portion of the graphical representation in a display window.

In another aspect, an orthodontic analysis system comprises a scanning device, an image overlay processor, and a display device. The scanning device acquires image data related to an object scene of an intra-oral cavity. The image overlay processor generates at least one of a current video image and 3D data from the acquired image data, and configures the current video image for overlay on a graphical representation of accumulated data of the 3D data. The display device includes a window for displaying the video image on a respective portion of the graphical representation of the 3D data.

In another aspect, a computer program product is provided for displaying intra-oral measurement data. The computer program product comprises a computer readable storage medium having computer readable program code embodied therewith. The computer readable program code comprises computer readable program code configured to direct a measurement field of view of an intra-oral scanning device at a first region of an object scene to acquire image data related to the first region. The computer readable program code further comprises computer readable program code configured to acquire image data corresponding to the object scene along a path between the first region and a second region of the obj ect scene. The computer readable program code further comprises computer readable program code configured to present a graphical representation of a set of three-dimensional (3D) data generated from the image data acquired for the first region of the object scene to the second region of the object scene. The computer readable program code further comprises computer readable program code configured to present a current video image of the object scene in the measurement field of view, wherein the current video image overlays a respective portion of the graphical representation of accumulated data of the set of 3D data.

### BRIEF DESCRIPTION OF THE SEVERAL VIEWS OF THE DRAWINGS

[0010] The above and further advantages of this invention may be better understood by referring to the following description in conjunction with the accompanying drawings, in which like numerals indicate like structural elements and features in various figures. The drawings are not necessarily to scale, emphasis instead being placed upon illustrating the principles of the invention.

FIG. 1 is a schematic diagram of an environment for acquiring image data related to dental structures during an intra-oral scanning operation and displaying images from the acquired image data, in accordance with an embodiment;

FIG. 2 is a block diagram of the scanning device and the image overlay system of FIG. 1, in accordance with an embodiment;

FIG. 3 is a flowchart of a method for presenting dental structure image data acquired during a scanning operation, in accordance with an embodiment;

FIGs. 4A-4C show a measurement field of view at various positions along an upper dental arch during a measurement scan of a dental arch and also show displayed results from the measurement scan, in accordance with an embodiment;

FIG. 5 is a flowchart of a method for displaying intra-oral measurement data related to a dental arch, in accordance with an embodiment;

FIG. 6 is a flowchart of a method for obtaining three-dimensional (3D) surface data of a dental arch, in accordance with an embodiment; and

FIG. 7 shows a set of intra-oral measurement data displayed in a window, in accordance with an embodiment.

### DETAILED DESCRIPTION

The present teaching will now be described in more detail with reference to exemplary embodiments thereof as shown in the accompanying drawings. While the present teaching is described in conjunction with various embodiments and examples, it is not intended that the present teaching be limited to such embodiments. On the contrary, the present teaching encompasses various alternatives, modifications and equivalents, as will be appreciated by those of skill in the art. Those of ordinary skill in the art having access to the teaching herein will recognize additional implementations, modifications and embodiments, as well as other fields of use, which are within the scope of the present disclosure as described herein.

The methods of the present invention may include any of the described embodiments or combinations of the described embodiments in an operable manner. In brief overview, systems and methods of the present inventive concepts produce a display of a graphical representation of 3D data as well as a video image overlaid on a portion of the graphical representation. The video image can be a real-time or near-real time 2D video stream that can correspond to a measurement field of view of the clinician. The 3D data and the video image are generated from a set of 2D image data taken during a measurement scan of an object scene, for example, a dental arch in an intra-oral cavity. A graphical representation of the acquired 3D data is generated during a 3D measurement scan of the object scene. As additional 3D data is acquired and displayed during the measurement scan, the graphical representation can grow. The video image is displayed in a window at a portion of the display and is overlaid on a portion of the graphical representation of the 3D data.

As described above, a clinician such as a dentist typically performs different scans of a set of teeth in order to obtain a full and "final" 3D data set representation of all surfaces observed during the measurement procedure. To achieve this, the clinician maneuvers a scanner wand in the patient's mouth and acquires the 3D data in a preferred sequence so that the final 3D data set resulting from all the 3D data more accurately represents the dental arch. In particular, a first 3D data set is generated and additional sequences of second 3D data are subsequently joined to the first 3D data set. Individual scan segments are used to acquire subsets of 3D data for the final 3D data set, which can include a point cloud, a wireframe representation, or other 3D surface representations. For example, data acquisition starts by acquiring data from a measurement field of view at the patient's left back molar of the upper dental arch. The wand is then moved along the arch to the right back molar. The clinician can then position the wand so that the measurement field of view includes a portion of the first 3D data set, and new 3D data are acquired that overlap a portion of the first 3D data set. Preferably, the 3D measurement system provides an affirmative visual or audible indication to the clinician when the new 3D data for the real-time position of the measurement field of view "locks on" to the display of the surface for the first 3D data set. The newly-acquired 3D data are then registered or joined to the first 3D data and serve as the start of a different scan segment for the arch. The wand is then rotated about its primary axis and moved so that a new portion of the surface of the arch is within the measurement field of view and 3D data are acquired. The wand is then maneuvered by the clinician so that the measurement field of view moves along a new segment of the arch surface.

A clinician can have difficulty locking the measurement field of view to the display of the surface for the first 3D data set due to difficulty interpreting a graphical display of 3D data, for example, due to a lack of shading, color, and other viewing characteristics. Thus, 3D data for the subsequent scan segment may not properly "register" to the existing 3D data in the common coordinate reference system. The acquisition of additional 3D data can be interrupted, for example, when switching between different scans, where the additional 3D points cannot be joined.

The present invention permits the scanning wand to be repositioned by the clinician to a position such that the current video image substantially matches a portion of the 3D data displayed in the same display window as the video image. Once 3D data represented in the displays are determined to be similar in their region of overlap, the acquisition of 3D measurement data resumes and subsequently determined 3D data are joined to the previously acquired 3D data. Providing a live video image for a current measurement field of view can therefore facilitate the interpretation of the previously acquired and displayed 3D data. Thus, an intra-oral measurement procedure can be performed more efficiently, resulting in less discomfort to the patient and shorter acquisition times.

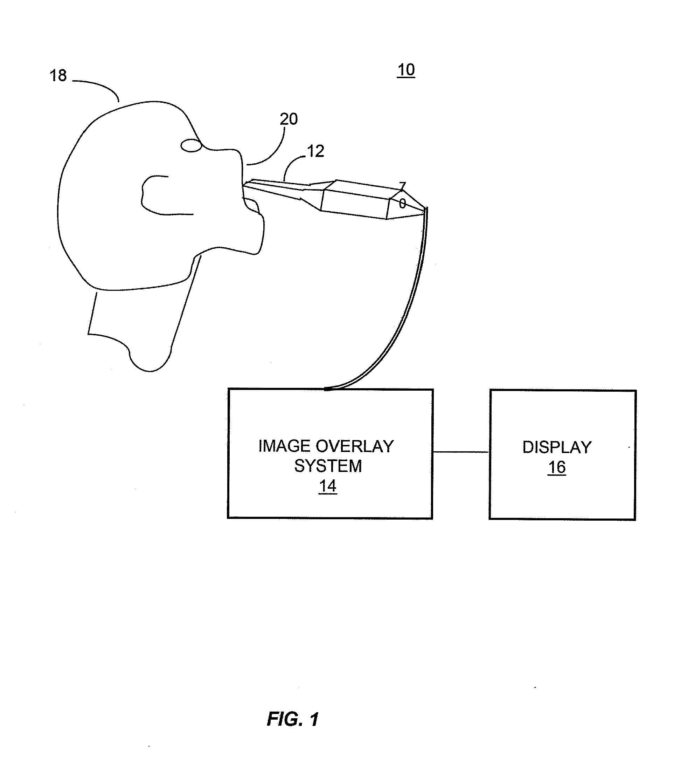

FIG. 1 is a schematic diagram of an environment 10 for acquiring image data related to dental structures during an intra-oral scanning operation and displaying images from the acquired image data, in accordance with an embodiment. The environment 10 includes a scanning device 12, an image overlay system 14, and a display 16. The scanning device 12, the image overlay system 14, and the display 16 can each include a processor, a memory, and an I/O interface. The memory can include removable and/or non-removable storage media implemented in accordance with methods and technologies known to those of ordinary skill in the art for storing data. Program code, such as program code of an operating system, graphics, applications, and the like for execution by the processor is stored in a memory. Data related to 2D and/or 3D images can likewise be stored in a memory.

The scanning device 12 is constructed to measure one or more object surfaces by scanning an object scene. In doing so, the scanning device 12 captures 2D image data that is used to generate 2D and/or 3D images for display. The scanning device 12 can be an intra-oral scanner such as a wand. When the scanning device 12 is inserted in the intra-oral cavity 20 of a patient 18, a dentist, a hygienist, or other clinician can conduct a 3D scan of a dental arch or other intra-oral structures.

The acquired image data is output to the image overlay system 14, which converts the image data into a set of 3D data. The image overlay system 14 processes the 3D data to generate one or more wireframe representations, point clouds, or other 3D object surface representations.

The image overlay system 14 overlays a portion of the graphical representation of the 3D data with a real-time or near-real time 2D video image of a section of a current object scene in the measurement field of view for a current position of the scanning device 12. The video image is presented in a window of the display 16. At any time during active scanning, the video image can show a true grayscale or color image of the oral cavity within the field of view of the scanning device 12, while the 3D display shows accumulated surface data of the scanning operation. During operation, the point cloud or object surface representation appears to grow within the display 16 while the live video image allows the clinician to see the portion of the oral cavity currently being measured.

The display 16 preferably includes its own processor and memory for providing a graphical user interface to display the graphical representation of the 3D data generated from the acquired image data. The display 16 can include a touchscreen or a monitor coupled to the image overlay system 14 for receiving 2D and/or 3D image feeds from the image overlay system 14. The display 16 includes a window for displaying 2D video of an object scene overlaid on the 3D representation of the object scene.

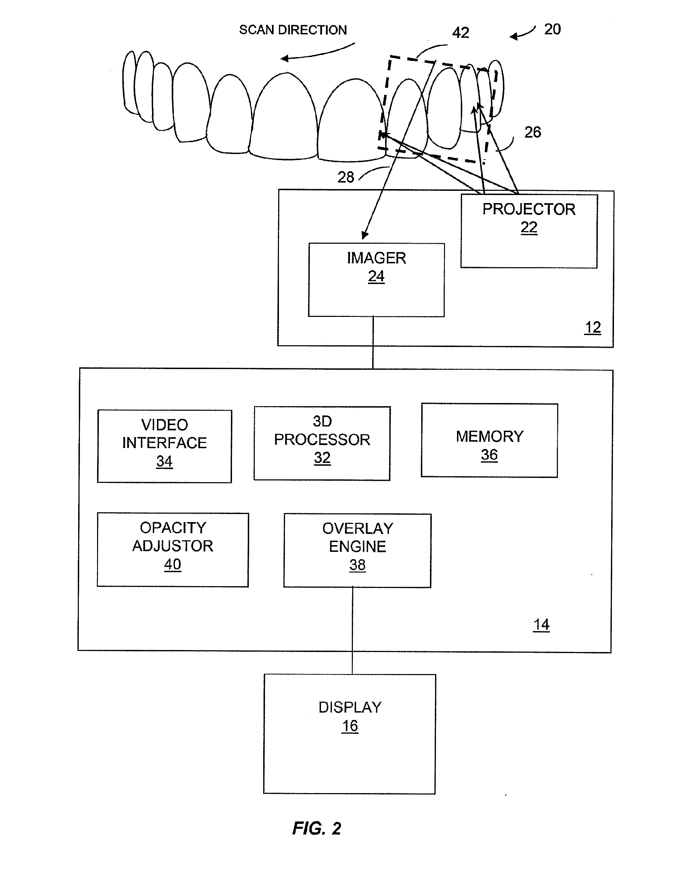

FIG. 2 is a block diagram of the scanning device 12 and the image overlay system 14 of FIG. 1, in accordance with an embodiment. The scanning device 12 includes a projector 22 and an imager 24. The projector 22 includes a radiation source, for example, a light or laser source, for projecting an optical radiation pattern 26, for example, light, onto a-dental arch in a patient's mouth, which includes a set of teeth, gums, and the like. In an embodiment, the projector 18 is a fringe projector that emits optical radiation, for example, two divergent optical beams generated from a coherent light source (e.g. a laser diode), where they generate a fringe pattern. A surface of the dental arch is illuminated with the fringe pattern. A related approach is described in U.S. Patent No. 5,870,191, incorporated herein by reference in its entirety, where a technique referred to as Accordion Fringe Interferometry (AFI) can be used for high precision 3D measurements based on interferometric fringe projection.

The imager 24 can include a charge-coupled device (CCD) camera or other imaging device that includes one or more image sensors, a photodetector array, or related electronic components (not shown) that receive one or more beams 28 of optical radiation reflected or otherwise received from the surface of the illuminated dental arch 20. As is well-known to those of ordinary skill in the art, electrical signals can be generated by the imager 24, for example, an array of photodetectors or CCD readers (not shown), in response to the received radiation. The imager 24 can capture the signals used to process a two dimensional image of the dental arch 20, and generate an image of the projection pattern after reflection of the pattern off the surface of the dental arch 20.

The images acquired by the imager 24 include 3D information related to the surface of the object 20. The images, more specifically, 2D image data including this information, are output to a 3D processor 32. The 3D processor can generate 3D data from the received image data.

The image overlay system 14 can include the 3D processor 32, a video interface 34, a memory 36, an overlay engine 38, and an opacity adjuster 40. All of these elements can execute entirely on the image overlay system 14. Alternatively, some elements can execute on the image overlay system 14 or other computer platform, while other elements execute on the scanning device 12, the display 16, or a remote computer. For example, the 3D processor 32 can be part of the image overlay system 14 as shown in FIG. 2. Alternatively, the 3D processor 32 can be part of the scanning device 12. In another example, the overlay engine 38 can be part of the image overlay system 14 as shown in FIG. 2, or can alternatively be part of the display 16.

The 3D processor 32 can receive signals related to one or more 2D images from the imager 24. For example, the signals can includes information on the intensity of the light received at each photodetector in the imager 24. In response, the 3D processor 32 can calculate the distance from the imager 24, for example, a detector array, of the scanning device 12 to the surface of the dental arch 20 for each pixel based on the intensity values for the pixel in the series of generated 2D images. Thus, the 3D processor 32 creates a set of 3D coordinates that can be displayed as a point cloud or a surface map that represents the object surface. The 3D processor 32 communicates with the memory 36 for storage of 3D data generated during a measurement procedure. A user interface (not shown) allows an operator such as a clinician to provide operator commands and to observe the acquired 3D information in a near-real time manner. For example, the operator can observe a display of the growth of a graphical representation of the point cloud as different regions of the surface of the dental arch 20 are measured and additional 3D measurement data are acquired.

The video interface 34 can likewise receive 2D image data from the scanning device 12. The 2D image data can be the same data as that received by the 3D processor 32, for example, from the imager 24. Optionally, the video interface 34 can receive 2D image data from a different source, for example, a video camera instead of the scanning device 12. The video interface 24 processes and outputs from the received 2D image data a real-time or "live" video image of the surfaces being measured to the overlay engine 38. In particular, the image data received by the video interface 34 corresponds to a portion of the dental arch in the measurement field of view 42 of the scanning device 12.

As described above, the memory 36 can store the 3D data and/or 2D data. The memory 36 can also include machine executable instructions enabling the 3D processor 32 to process the points in a point cloud and/or generate a single mesh surface configuration representing the scanned object, i.e., the dental arch 20 for the display 16. The memory 36 can include volatile memory, for example, RAM and the like, and/or non-volatile memory, for example, ROM, flash memory, and the like. The memory can include removable and/or non-removable storage media implemented in accordance with methods and technologies known to those of ordinary skill in the art for storing data. Stored in the memory can include program code, such as program code of an operating system executed by the image generator 34, the 3D processor 32, or other processors of the image overlay system 14.

The overlay engine 38 can be part of a display processor or graphical user interface for displaying the 3D data as a graphical representation on the display 16. The overlay engine 38 includes a first input that receives a 2D video feed from the video interface 34 and a second input that receives 3D data from the 3D processor. The overlay engine 38-can overlay or superimpose real-time or near-real time video images of the 2D feed corresponding to the dentition within the field of view of the imager 24 overlaid on at least a portion of the graphical representation of the 3D data, for example, one or more point clouds or object surface representation.

During an operation, the 3D data and video images can be output from the overlay engine 38 to the display 16, and can be configured by the overlay engine 38 such that the 3D data is displayed as a point cloud, object surface representation on the display, and the video images are displayed in a window on the display. In a preferred embodiment, the video image is displayed in a window centered in the viewing area of the display 16. The window in which the video image is displayed can have a rectangular or square shape that is substantially smaller than the rectangular shape of the viewing area of the display 16. The display 16 can include a user interface (not shown) for presenting the received images in grayscale, color, or other user-defined format, and for permitting a user to enter commands, view images, or other well-known functions for performing a scanning and/or display operation.

A portion of the 3D data can also be available for presentation in the window. The opacity adjuster 40 can be configured to change the opacity level of the 3D data and/or the video image in the window. For example, the video image can be presented as being substantially opaque and the portion of the graphical representation of the 3D data in the window can be transparent to prevent a display of the graphical representation of the 3D data in a region of overlay identified by the window. The opacity adjuster 40 can reduce the opacity of the video image and/or reduce the transparency of the graphical representation of the set of 3D data in the region of overlay identified by the window. In this manner, the video image and the graphical representation of the set of 3D data in the region of overlay can be simultaneously viewed in the window. This feature can be beneficial when a clinician attempts to "stitch" or join a 3D point cloud or surface map to a previously acquired 3D point cloud or surface map. In particular, a change in transparencies of the video image and 3D data allows the clinician to maneuver the scanning device to substantially match a live video image with a portion of the displayed, previously generated 3D data. Once the two displays are determined to be substantially similar in their region of overlap, the acquisition of a 3D measurement scan can resume, and subsequently determined 3D data sets, e.g. point clouds or surface maps, can be stitched to an existing 3D data set.

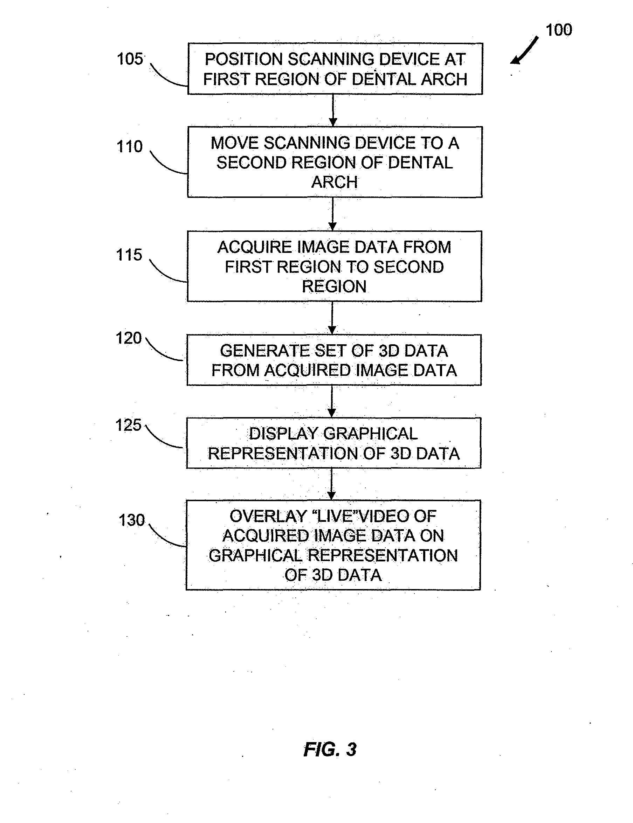

FIG. 3 is a flowchart of a method 100 for presenting dental structure image data acquired during a scanning operation. In describing the method 100, reference is also made to FIGs. 1 and 2. The method 100 can be governed by instructions that are stored in a memory and executed by a processor of the scanning device 12, the image overlay system 14, and/or the display 16. The method 100 is described herein as being performed on a dental arch. In other embodiments, the method 100 can be performed on virtually any object.

A clinician such as a dentist initiates the method 100 by positioning (step 105) the scanning device 12 at a starting point of the dental arch so that a structured light pattern generated from the scanning device 12 illuminates a first region of the dental arch, for example, a back portion of an occlusal surface of the dental arch at one end of the arch. Image data for providing 2D and/or 3D images can be acquired for the illuminated portion of the surface of the dental arch at the first region. The scanning device can include a 2D imager 24 with a small measurement field of view (FOV) (e.g., 13 mm x 10 mm) relative to the full arch. The imager 24 can include a camera that captures 2D images of the surface and displays them on the display 16. The camera can be a video camera and present the 2D images as a real time or near real time video stream.

The clinician can move (step 110) the scanning device 12 along a path proximal to a surface of the dental arch to a second region of the dental arch. Here, the structured light pattern generated from the scanning device 12 can illuminate a remainder of the surface of the dental arch along the path, for example, the occlusal surface. Image data can therefore be acquired (step 115) for the remainder of the occlusal surface from the first region to the second region. A set of 3D data can be generated (step 120) from the acquired image data. A graphical representation of the 3D data can be displayed (step 125) as a wireframe representation, an object map, and the like.

The 2D video can be overlaid (step 130) on the graphical representation of 3D data. The 2D video can be provided from the acquired image data, or other 2D image data, for example, acquired from a CCD camera. The video image can corresponds to a current measurement field of view directed at a region of object scene for receiving image data related to that region.

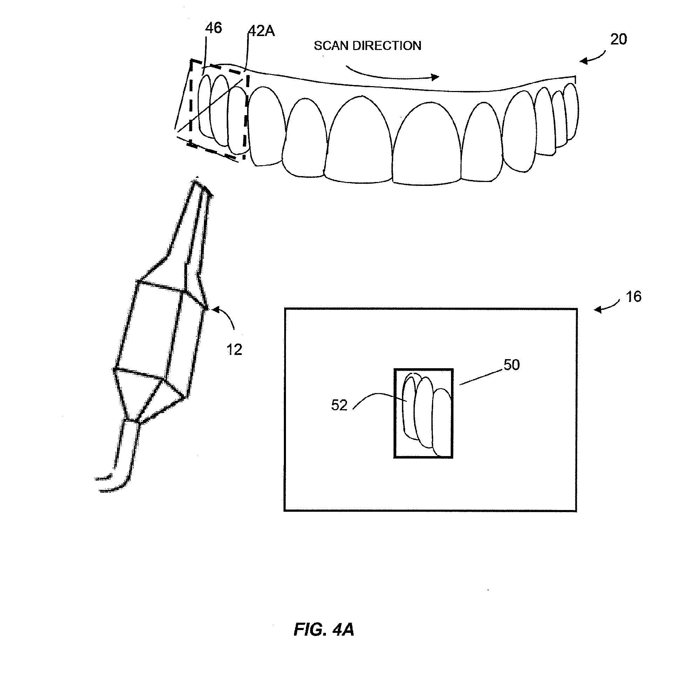

FIGs. 4A-4C show a measurement field of view at various positions along an upper dental arch during a measurement scan of a dental arch and also show displayed results from the measurement scan according to the method of FIG. 3, in accordance with an embodiment. The measurement scan can be performed using a handheld image-capturing device such as the scanning device 12 of FIGs. 1 and 2. During the measurement scan, a set of 2-D images of the dental arch 20 can be acquired. In FIG. 4A, a measurement scan can be initiated by acquiring image data from within a measurement field of view 42A at the patient's right back region of the upper dental arch 20, for example, starting with the back molar 46. The image data can be acquired according to acquisition techniques related to AFI measurements, or other techniques involving the projection of structured light patterns projected onto the surface to be measured.

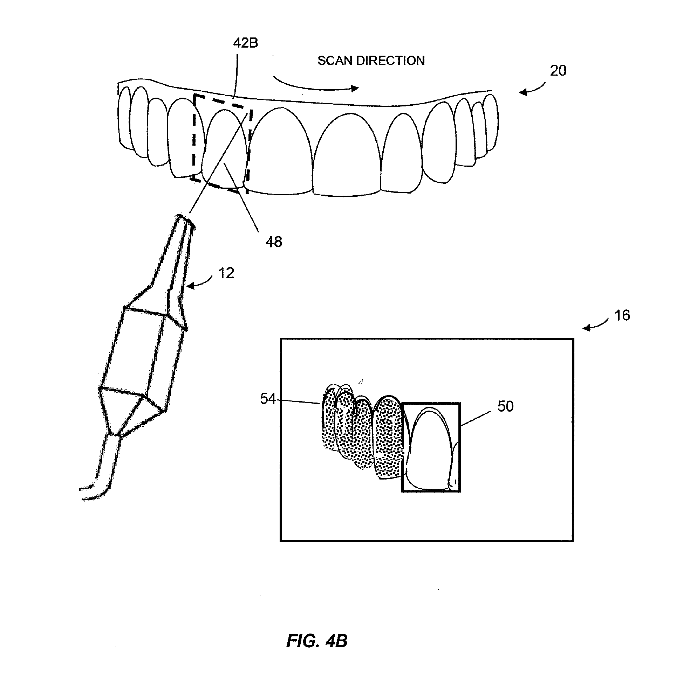

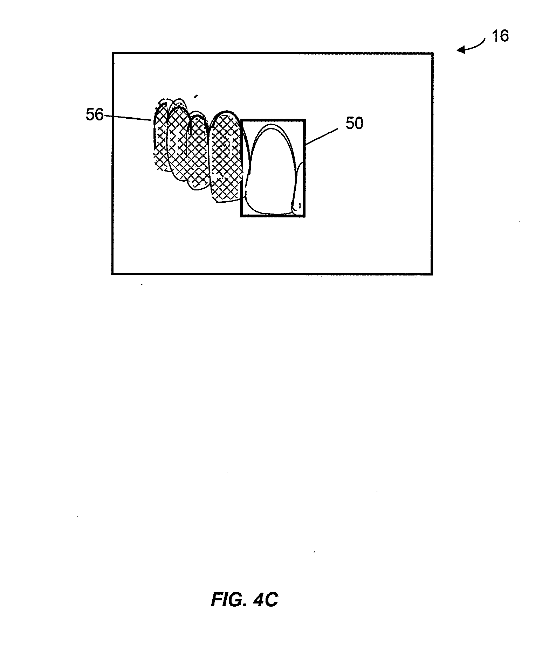

A substantially real-time 2D video image can be displayed of the surface being measured. For example, an image 52 of the back molar 46 within the field of view 42A of the scanning device 12 can be displayed in a display window 50. In addition, 3D data is generated from the image data acquired at the region of the dental arch 20 in the field of view 42A. The 3D data can be generated from image data acquired by the imager 24 of the scanning device 12, or from another source, for example, a different CCD camera. As shown in FIG. 4B, the 3D data can be displayed as a 3D point cloud 54. Alternatively, as shown in Fig. 4C, the 3D data can be displayed as a 3D surface map 56 that represents the object surface.

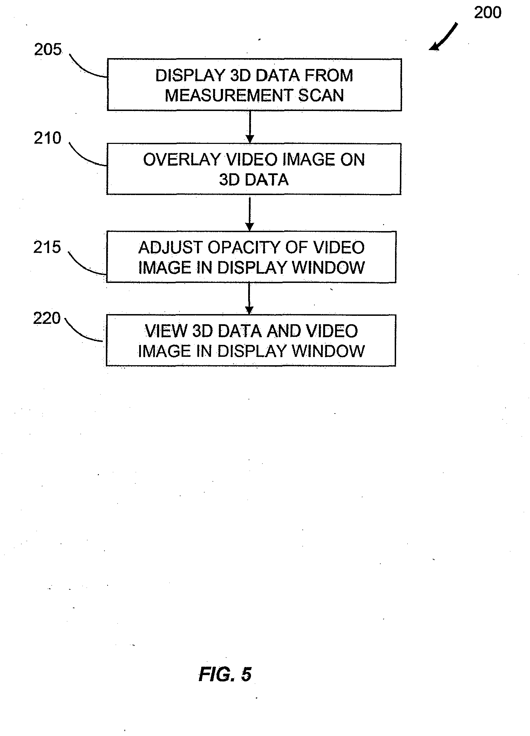

FIG. 5 is a flowchart of a method 200 for displaying intra-oral measurement data related to a dental arch, in accordance with an embodiment. In describing the method 200, reference is also made to FIGs. 1-4. The method 200 can be governed by instructions that are stored in a memory and executed by a processor of the scanning device 12, the image overlay system 14, and/or the display 16. The method 200 is described herein as being performed on a dental arch; however, in other embodiments the method 200 can be performed on virtually any object.

The method 200 can be initiated by a clinician positioning the scanning device 12 at a starting point of the dental arch and generating 2D and/or 3D image data for example described above.

3D data generated from the measurement scan can be displayed (step 205) on the display 16. The 3D data can be displayed as a 3D point cloud, a 3D object surface representation, or related graphical representation. The display 16 can include a window that presents a 2D video image of acquired image data of an object scene in a measurement field of view. The video image displayed in the window overlays (step 210) a portion of the graphical representation of the 3D data.

Some of the previously acquired 3D points can be present in a display window allocated for the live 2D video image. The transparency of the 3D display within the region of the display monitor shared with the 2D video image can be set for full transparency, for example, 100% transparency, while the transparency for the 2D video image can be set for a low transparency or no transparency, for example, 0% transparency, or opaque. Consequently, only the 2D video image is visible in the smaller region of overlapped displays.

The opacity of at least one of the first 3D data and the video image in the display window is adjusted (step 215). In this manner, a clinician can view (step 220) both 3D and the current video image in the display window, for example, when joining new 3D data to a current set of 3D data.

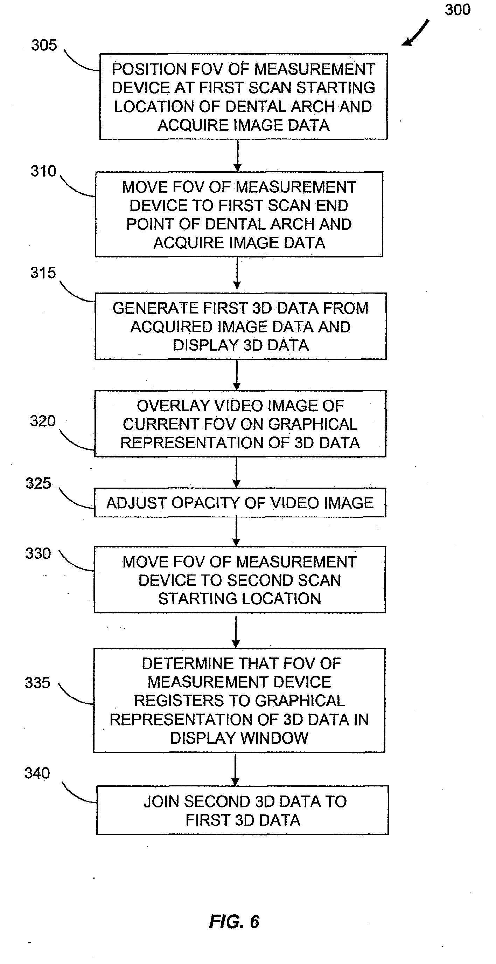

FIG. 6 is a flowchart of a method 300 obtaining three-dimensional (3D) surface data of a dental arch, in accordance with an embodiment.

The method 300 can begin with a clinician positioning (step 305) an intra-oral measurement device 12 at a first starting point proximal to a first region of the dental arch 20, for example, a region include a back molar 46 shown in FIG. 4A. Image data can be acquired from the first region of the dental arch 20 by directing a measurement field of view 42A of the intra-oral measurement device 12 at the first region and performing a scan of the first region.

The clinician can perform the first scan by moving (step 310) the measurement device 12 along a path proximal to the surface of the dental arch 20 to a first end point of the dental arch 20, for example, at region 48 shown in FIG. 4B. Image data can be acquired from the surface of the dental arch 20 during the first scan from the first starting end point to the first end point of the dental arch 20.

A first 3D data set can be generated from the acquired image data, and displayed (step 315) at the display 16. The 3D data can be displayed as a point cloud 54 as shown in FIG. 4B, or displayed as a wireframe or 3D object surface representation 56 shown in FIG. 4C.

A current field of view of the video image is overlaid (step 320) on the graphical representation of the 3D data.

The opacity of the video image is adjusted (step 325), for example, reduced, so that the underlying 3D data is more visible to the user.

The FOV of the measurement device 12 is moved (step 330) to a second scan starting location. For example, a first scan such as an occlusal scan can be temporarily stopped or interrupted, whereby the clinician can move the measurement device 12 back to a region proximal to the starting location of the occlusal scan in order to perform a different scan.

The FOV of the measurement device 12 registers (step 335) to the graphical representation of the 3D data in the overlap region in the display window. This can be achieved by moving the measurement device 12 until a substantial match is determined between the opacity-adjusted video image and the set of 3D data in the region of overlay viewable in the window.

Subsequent 3D data, for example, new wireframe representations of the dental arch, is joined (step 340) to the 3D data. When new 3D data is obtained after registration, the video image can be automatically changed to full opacity, whereby the 3D data is hidden from view in the display window so that the live video corresponding with a current measurement field of view is prominently displayed in the window.

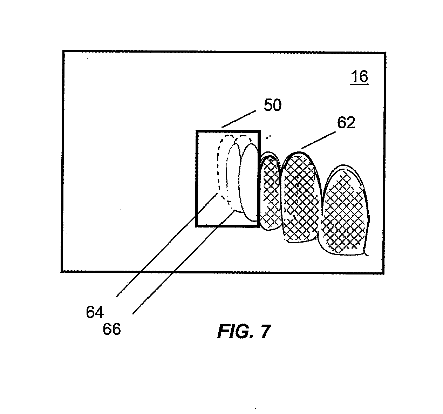

FIG. 7 shows a set of intra-oral measurement data 64, 66 displayed in a window 50 of the display 16, in accordance with an embodiment. The measurement data includes a video image 64 (dotted line) having a reduced opacity relative to a graphical representation of 3D data 66 displayed in the window 50, which is part of a set of a graphical representation of 3D data 62 presented in the display 16 outside the window 50. The methods described in FIGs. 5 and 6 can be applied to display the measurement data as shown in FIG. 7.

It should be also understood that many of the functional units described in this specification have been labeled as modules or systems, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

A storage device can include a computer readable storage medium, which may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

While the invention has been shown and described with reference to specific embodiments, it should be understood by those skilled in the art that various changes in form and detail may be made therein without departing from the scope of the invention which is as claimed in the appended claims.

## Claims

1. A method for displaying intra-oral measurement data, comprising:
directing a measurement field of view of an intra-oral scanning device at a first region of an object scene to acquire image data related to the first region;
moving the intra-oral scanning device from the first region along a path proximal to one or more surfaces of the object scene to a second region of the object scene;
acquiring, by the intra-oral scanning device, image data corresponding to the object scene along the path;
presenting in a display a set of three-dimensional (3D) data generated from the image data acquired for the first region of the object scene to the second region of the object scene; and
presenting in a window of the display a current video image of the object scene in the measurement field of view, wherein the current video image overlays a respective portion of a graphical representation of accumulated data of the set of 3D data.

2. The method of claim 1, further comprising:
configuring the window of the display to present the current video image as a substantially opaque video image to prevent a display of the graphical representation in a region of overlay identified by the window;
reducing the opacity of the current video image in the region of overlay identified by the window to display the 3D in the window; and
simultaneously viewing the current video image and the graphical representation in the region of overlay identified by the window.

3. The method of claim 2, further comprising:
temporarily interrupting an acquisition of image data;
moving the intra-oral scanning device to a third region proximal to the first region;
moving the intra-oral measurement device until a substantial match is determined between the opacity-adjusted video image and the opacity-adjusted portion of the set of 3D data in the region of overlay viewable in the window;
resuming the acquisition of image data; and
joining a new set of 3D data generated from the resumed acquisition of image data to the graphical representation.

4. The method of claim 1, further comprising:
generating at least one wireframe representation, 3D surface map, or point cloud from the set of 3D data; and
presenting the at least one wireframe representation, 3D surface map, or point cloud as the graphical representation.

5. The method of claim 1, wherein the object scene includes a dental arch, and wherein the method further comprises:
positioning the intra-oral scanning device at a first scan starting point proximal to a first region of the dental arch;
directing the measurement field of view of the intra-oral scanning device at the first region of the dental arch; and
moving the intra-oral scanning device from the first scan starting point along a path proximal to a surface of the dental arch to a first scan end point proximal to a second region of the dental arch to acquire image data from the first scan starting point to the first scan end point;
displaying a set of 3D data generated from the image data acquired from the first scan starting point to the first scan end point at a display; and
overlaying a video image of the dental arch on a respective portion of a graphical representation of accumulated data of the set of 3D data generated from the image data acquired from the first scan starting point to the first scan end point.

6. The method of claim 5 further comprising displaying the 3D data generated from the image data acquired from the first scan starting point to the first scan end point in the window of the display by adjusting an opacity level of the video image of the dental arch.

7. The method of claim 5, further comprising:
moving the intra-oral measurement device to a second starting point proximal to the first region of the dental arch until a substantial match is determined in a region of overlap between the current video image and the portion of the set of 3D data in the window of the display;
resuming the acquisition of image data; and
joining a new 3D data set generated from the resumed acquisition of image data to the 3D data of the acquired image data, the new 3D data set overlapping a portion of the set of 3D data.

8. An image overlay system, comprising:
a 3D processor that generates three-dimensional (3D) data from image data acquired in an intra-oral scan procedure;
a video interface that outputs a current video image in response to receiving the image data; and
an overlay engine that generates a graphical representation of accumulated data of the 3D data and that overlays a respective portion of the graphical representation in a display window.

9. The image overlay system of claim 8 further comprising an opacity adjuster that adjusts an opacity level of the current video image such that a portion of the set of 3D data is viewed in the display window in relation to the current video image.

10. The image overlay system of claim 8, wherein the overlay engine includes a processor that generates at least one of a 3D surface map, a wireframe representation, and a point cloud from the set of 3D data.

11. The image overlay system of claim 8, wherein the image overlay system is arranged in an orthodontic analysis system, the orthodontic analysis system further comprising:
a scanning device that acquires the image data related to an object scene of an intra-oral cavity in the intra-oral scan procedure; and
a display device that includes the display window for displaying the current video image on a respective portion of the graphical representation of the accumulated data of the 3D data.

12. A computer program product for displaying intra-oral measurement data, the computer
program product comprising:
a computer readable storage medium having computer readable program code embodied therewith, the computer readable program code comprising;
computer readable program code configured to direct a measurement field of view of an
intra-oral scanning device at a first region of an object scene to acquire image data related to the first region;
computer readable program code configured to acquire image data corresponding to the object scene along a path between the first region and a second region of the object scene;
computer readable program code configured to present a graphical representation of a set of three-dimensional (3D) data generated from the image data acquired for the first region of the object scene to the second region of the object scene; and
computer readable program code configured to present a current video image of the
object scene in the measurement field of view, wherein the current video image overlays a respective portion of the graphical representation of accumulated data of the set of 3D data.
